# FASCICULE DE BREVET EUROPEEN

(11) **EP 0 976 597 B1**
(45) Date de publication et mention de la délivrance du brevet: **13.08.2003**
(21) Numéro de dépôt: 99401933.9
(22) Date de dépôt: 28.07.1999
(51) Int. Cl.: B60K 15/035

(54) **Clapet pour réservoir à carburant de véhicle automobile**
Ventil für den Kraftstofftank eines Kraftfahrzeuges
Valve for the fuel tank of a motor vehicle

(30) Priorité: 28.07.1998 FR 9809615
(43) Date de publication de la demande: 02.02.2000
(73) Titulaire: COMPAGNIE PLASTIC OMNIUM, 69007 Lyon (FR)
(72) Inventeur: Rosseel, Alexis, 60200 Compiegne (FR); Baudoux, Patrice, 02520 Flavy le Martel (FR)
(74) Mandataire: Leszczynski, André

(56) Documents cités:
- US-A- 5 449 029
- US-A- 5 687 753

## Description

La présente invention concerne un clapet pour réservoir à carburant notamment de véhicule automobile, selon le préambule de la revendication 1.

Ce type de clapet peut comporter, soit un obturateur mobile s'opposant au départ de carburant liquide par le circuit de mise à l'air libre en cas de retournement accidentel du véhicule -on parle de fonction R.O.V.-, soit un obturateur mobile venant fermer au moins partiellement le circuit de mise à l'air libre lorsque le véhicule est au repos, pour éviter le sur-remplissage et garantir un volume libre d'expansion - on parle de fonction I.S.R. -, soit deux obturateurs mobiles accomplissant respectivement les deux fonctions précitées, soit encore un obturateur mobile unique agencé pour réaliser les deux fonctions ci-dessus à la fois.

Le circuit de mise à l'air libre comporte un filtre à charbons actifs ou analogue pour retenir les vapeurs de carburant et empêcher leur rejet dans l'atmosphère.

On connaît par le brevet US 5 687 753 un clapet selon le préambule de la revendication 1 comportant trois parois coaxiales, pourvues de fentes verticales destinées à récupérer les gouttelettes de carburant liquide entraînées par l'écoulement gazeux gagnant l'intérieur du clapet.

Un tel clapet est de fabrication relativement complexe.

La présente invention a pour objet de prolonger la durée pendant laquelle le filtre est efficace en évitant les remontées de carburant, sous forme de projections.

Elle y parvient par le fait que le logement du clapet dans lequel l'obturateur est retenu communique avec l'environnement gazeux du clapet à l'intérieur du réservoir par l'intermédiaire d'un passage par lequel communiquent deux gorges annulaires, ce passage constituant le sommet d'une chicane obligeant l'écoulement à circuler vers le haut et vers le bas.

La société déposante a constaté que grâce à cette configuration particulière du clapet selon l'invention qui oblige l'écoulement à circuler vers le haut et vers le bas, on réduisait fortement la quantité de carburant liquide susceptible d'être entraînée par l'écoulement gazeux jusqu'au filtre.

Le clapet selon l'invention est également relativement simple à fabriquer de part sa structure.

Dans une réalisation particulière, le clapet comporte trois parois annulaires concentriques disposées en chicane, le logement précité étant défini par la paroi radialement la plus intérieure.

De préférence, la paroi radialement la plus extérieure est venue de moulage avec une collerette servant à la fixation du clapet sur le réservoir.

De préférence également, cette paroi est dirigée vers le bas et a son extrémité inférieure qui se situe au-dessus du niveau maximum du carburant dans le réservoir lorsque celui-ci est au repos et que le véhicule repose sur une surface horizontale.

Dans une réalisation particulière, la chicane communique avec l'intérieur du logement par l'intermédiaire d'un ensemble d'orifices situés sensiblement en regard de la paroi latérale de l'obturateur.

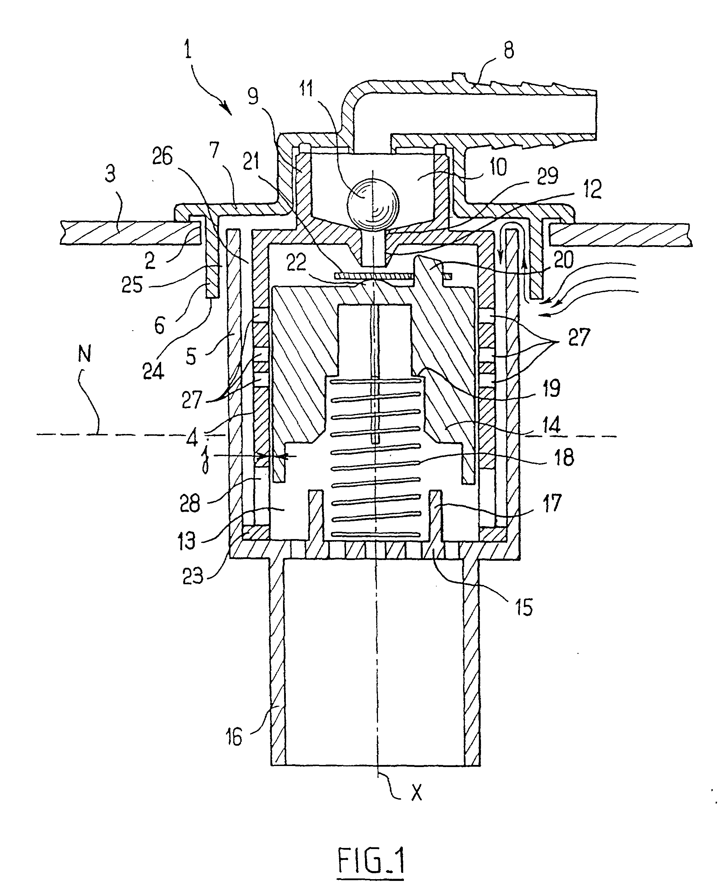

D'autres caractéristiques et avantages de la présente invention apparaîtront à la lecture de la description détaillée qui suit, et à l'examen du dessin annexé sur lequel la figure 1 représente en coupe axiale schématique un exemple de clapet 1 conforme à l'invention.

Comme on le voit sur cette figure, le clapet 1 est fixé dans une ouverture 2 de la paroi supérieure 3 d'un réservoir de carburant de véhicule automobile.

On a indiqué par un trait discontinu le niveau N maximal du carburant dans le réservoir lorsque ce dernier est au repos et que le véhicule repose sur une surface horizontale.

Le clapet 1 comporte trois parois cylindriques, respectivement référencées (de l'intérieur vers l'extérieur) 4, 5 et 6, qui sont disposées en chicane comme cela va être décrit plus en détail dans la suite.

Ces trois parois 4 à 6 sont généralement symétriques de révolution autour d'un axe X.

La paroi 6, radialement la plus extérieure, se raccorde sur une collerette 7 qui sert à la fixation du clapet 1 sur la paroi 3 du réservoir.

La collerette 7 est prolongée vers le haut par un embout 8 qui sert à raccorder le clapet 1 à une tubulure d'un circuit de mise à l'air libre non représenté, comportant un filtre à charbons actifs connu en soi pour récupérer les vapeurs de carburant.

La paroi 4, radialement la plus intérieure, est prolongée supérieurement par un col 9 qui forme un logement 10 pour une bille 11 dont la fonction sera expliquée plus loin.

Le logement 10 communique d'une part avec l'embout 8 et d'autre part, par un orifice 12, avec un logement 13 délimité radialement par la paroi 4, et dans lequel peut se déplacer un obturateur 14.

Le logement 13 est fermé inférieurement par un disque ajouré 15, sur la face supérieure duquel se raccorde la paroi 5.

Une jupe tubulaire 16 est réalisée sous le disque 15, et ce dernier est ajouré pour constituer un ajutage faisant communiquer le logement 13 et l'intérieur de cette jupe 16.

Une nervure annulaire 17 forme saillie sur la face supérieure du disque 15, pour servir de guide à l'extrémité inférieure d'un ressort 18 travaillant en compression et dont l'extrémité supérieure vient en appui contre un épaulement 19 de l'obturateur 14.

L'obturateur 14 est muni sur sa face supérieure d'un plot 20 qui sert au montage d'un volet 21 apte à obturer l'orifice 12.

Un bossage 22, centré sur l'axe X, est formé sur la face supérieure de l'obturateur 14, sous le volet 21.

Le volet 21 est monté avec jeu sur le plot 20 de manière à pouvoir pivoter verticalement par rapport à celui-ci, ce qui permet d'assurer le décollement du volet 21 de l'orifice 12 même en cas de surpression à l'intérieur du réservoir tendant à maintenir le volet 21 plaqué contre l'orifice 12.

La paroi 4 est munie, à son extrémité inférieure, d'un rebord 23 dirigé vers l'extérieur, qui sert d'entretoise entre les parois 4 et 5.

La paroi 6 a son extrémité inférieure 24 qui se situe au-dessus du niveau N maximal de carburant dans le réservoir.

Les gorges annulaires 25 et 26 respectivement formées entre les parois 5 et 6 d'une part et 4 et 5 d'autre part ont, dans l'exemple décrit, sensiblement la même épaisseur.

La gorge annulaire 26 communique avec le logement 13 par l'intermédiaire de deux groupes d'orifices 27, diamétralement opposés sur la paroi 4, constitués chacun par trois rangées parallèles de quatre trous chacune, la rangée supérieure de trous se situant juste au-dessous du niveau N maximal de carburant dans le réservoir au repos.

Deux orifices 28 diamétralement opposés sont en outre prévus à l'extrémité inférieure de la paroi 4 pour permettre au carburant liquide contenu dans la gorge 26 de s'écouler dans le bas du logement 13, sous l'obturateur 14, puis vers le réservoir par les ajours du disque 15.

Les orifices 27 débouchent dans l'espace annulaire formé entre la paroi latérale, cylindrique de révolution autour de l'axe X, de l'obturateur 14 et la surface intérieure de la paroi 4, cet espace annulaire ayant une épaisseur j de l'ordre de 1 mm dans l'exemple décrit.

L'assemblage du clapet est le suivant.

On glisse l'obturateur 14, muni du volet 21 retenu par le plot 20, dans la paroi 4, maintenue à l'envers. On insère ensuite la paroi 5 dans la paroi 4, la paroi 5 étant dans l'exemple décrit venue de moulage avec le disque 15, la nervure 17 et la jupe 16. Le rebord 23 est solidarisé à la paroi 5 par tout moyen approprié connu de l'homme du métier. On retourne ensuite l'ensemble et l'on place la bille 11 dans le col 9, avant de rapporter l'embout 8 venu de moulage avec la collerette 7, laquelle peut être fixée à la paroi 3 par soudure par exemple.

Dans l'exemple décrit, les parois 5 et 6 se recouvrent sur une hauteur de 12 mm. La largeur de chacune des gorges 25 et 26 vaut 2 mm. La hauteur du passage par lequel les gorges 25 et 26 communiquent au sommet de la chicane vaut 2,5 mm. Le diamètre extérieur de la paroi 6 vaut 59 mm, celui de la paroi 5 vaut 51 mm et celui de la paroi 4 vaut 43 mm.

Le fonctionnement du clapet 1 est le suivant.

Au repos, la bille 11 repose dans le fond du logement 10 et obture l'orifice 12.

Cette obturation peut être partielle seulement si, comme représenté sur le dessin, un évidement 29 est réalisé sur le bord supérieur de l'orifice 12 pour permettre une rentrée d'air en cas de dépression dans le réservoir.

L'obturateur 14 comprime par son poids le ressort 18, et le volet 21 se situe en retrait de l'extrémité inférieure de l'orifice 12.

La bille 11 maintient lors du remplissage une certaine surpression à l'intérieur du réservoir, empêchant son sur-remplissage.

Lors du roulage, la bille 11 peut s'écarter de son siège, permettant à un écoulement gazeux de quitter le réservoir.

Tant que le niveau de carburant dans le réservoir dépasse l'extrémité inférieure de la jupe 16, cet écoulement gazeux doit, pour atteindre le logement 13, circuler par la chicane formée entre les parois 4,5 et 6 comme illustré par des flèches sur le dessin puis traverser les orifices 27.

Cette chicane permet d'éviter que des gouttelettes de carburant liquide ne soient entraînées à l'intérieur du logement 13 par l'écoulement gazeux rentrant dans le clapet.

Ainsi, la proportion de carburant liquide qui quitte le clapet 1 vers le filtre à charbons actifs est considérablement réduite par rapport aux clapets de l'art antérieur.

L'obturateur 14 sert de sécurité anti-retournement en venant, lorsque l'axe X s'écarte angulairement au-delà d'une limite prédéterminée de la verticale, obturer l'orifice 12 pour empêcher que le carburant liquide ne gagne le circuit de mise à l'air libre.

Bien entendu, l'invention n'est pas limitée à l'exemple de réalisation qui vient d'être décrit.

On peut notamment, sans sortir du cadre de l'invention, réaliser les fonctions de sécurité anti-retournement et d'interdiction de sur-remplissage en utilisant des obturateurs autres que ceux qui viennent d'être décrits.

## Revendications

1. Clapet (1) pour réservoir à carburant, comportant un obturateur (14) mobile dans un logement (13) du clapet pour ouvrir et fermer au moins partiellement un orifice (12) du clapet, cet orifice permettant à un écoulement gazeux de quitter le réservoir vers un circuit de mise à l'air libre, ledit logement (13) communiquant avec l'environnement gazeux du clapet à l'intérieur du réservoir par l'intermédiaire d'un passage par lequel communique deux gorges annulaires (25,26), **caracterisé par le fait que** ce passage constitue le sommet d'une chicane (25,26) obligeant l'écoulement à circuler vers le haut et vers le bas.

2. Clapet selon la revendication 1, **caractérisé par le fait qu'**il comporte trois parois concentriques (4,5,6) disposées en chicane, ledit logement (13) étant défini par la paroi (4) radialement la plus intérieure.

3. Clapet selon la revendication 2, **caractérisé par le fait que** la paroi radialement la plus extérieure (6) est venue de moulage avec une collerette (7) servant à la fixation du clapet (1) sur le réservoir.

4. Clapet selon la revendication 2 ou 3, **caractérisé par le fait que** la paroi radialement la plus extérieure (6) est dirigée vers le bas et a son extrémité inférieure qui se situe au-dessus du niveau maximum (N) du carburant dans le réservoir lorsque celui-ci est au repos.

5. Clapet selon l'une quelconque des revendications 1 à 4, **caractérisé par le fait que** ladite chicane communique avec l'intérieur dudit logement (13) par l'intermédiaire d'un ensemble d'orifices (27) situés sensiblement en regard de la paroi latérale de l'obturateur.

6. Clapet selon la revendication précédente, **caractérisé par** le fait ledit ensemble d'orifices comporte deux groupes d'orifices constitués chacun par trois rangées parallèles de quatre trous chacune.

## Patentansprüche

1. Ventil (1) für einen Kraftstoffbehälter, das ein bewegliches Schließteil (14) in einem Sitz (13) des Ventils aufweist, um eine Öffnung (12) des Ventils schließen und zumindest teilweise zu öffnen, diese Öffnung ermöglicht es einem gasförmigen Ausfluss, den Behälter über eine Lüftungsvorrichtung zu verlassen, dabei befindet sich der Sitz (13) in Kommunikation mit der gasförmigen Umgebung des Ventils im Inneren des Behälters über einen Kanal, durch welchen zwei Ringnuten (25, 26) kommunizieren, **dadurch gekennzeichnet, dass** der Kanal den obersten Bereich einer Schikane (25, 26) bildet, die den Ausfluss zwingt, nach oben und nach unten zu zirkulieren.

2. Ventil nach Anspruch 1, **dadurch gekennzeichnet, dass** es drei konzentrische Wände (4, 5, 6) aufweist, die eine Schikane bildend angeordnet sind und dass der Sitz (13) durch die radial am weitesten innen liegende Wand (4) definiert ist.

3. Ventil nach Anspruch 2, **dadurch gekennzeichnet, dass** die radial am weitesten außen liegende Wand (6) im Spritzgussverfahren zusammen mit einem Kragen (7) hergestellt ist, der der Befestigung des Ventils (1) an dem Behälter dient.

4. Ventil nach Anspruch 2 oder 3, **dadurch gekennzeichnet, dass** die radial am weitesten außen liegende Wand (6) nach unten gerichtet ist und einen unteren Endbereich aufweist, der sich oberhalb des maximalen Niveaus (N) des Kraftstoffs in dem Behälter befindet, wenn dieser im Ruhezustand ist.

5. Ventil nach einem beliebigen der Ansprüche 1 bis 4, **dadurch gekennzeichnet, dass** die Schikane mittels eines Satzes von Öffnungen (27) mit dem Inneren des Sitzes (13) kommuniziert, die im Wesentlichen der Seitenwand des Schließorgans gegenüber liegend angeordnet sind.

6. Ventil nach einem der vorangegangenen Ansprüche, **dadurch gekennzeichnet, dass** der genannte Satz von Öffnungen zwei Gruppen von Öffnungen aufweist, die jeweils durch drei parallele Reihen von jeweils vier Bohrungen gebildet sind.

## Claims

1. Valve (1) for a fuel tank, comprising a shutter (14) that can move in a housing (13) of the valve to at least partially open and close an orifice (12) of the valve, this orifice allowing a gaseous flow to leave the tank towards a vent circuit, said housing (13) communicating with the gaseous environment of the valve within the tank via a passage via which two annular grooves (25, 26) communicate, **characterized in that** this passage constitutes the top of a chicane (25, 26) forcing the flow to flow upwards and downwards.

2. Valve according to Claim 1, **characterized in that** it comprises three concentric walls (4, 5, 6) arranged in a chicane, the said housing (13) being defined by the radially innermost wall (4).

3. Valve according to Claim 2, **characterized in that** the radially outermost wall (6) is moulded integrally with a flange (7) used to fix the valve (1) on the tank.

4. Valve according to Claim 2 or 3, **characterized in that** the radially outermost wall (6) is directed downwards and has its lower end situated above the maximum level (N) of the fuel in the tank when the tank is at rest.

5. Valve according to any one of Claims 1 to 4, **characterized in that** the said chicane communicates with the inside of the said housing (13) via a set of orifices (27) situated more or less facing the side wall of the shutter.

6. Valve according to the preceding claim, **characterized in that** the said set of orifices comprises two groups of orifices each consisting of three parallel rows of four holes each.
